# EUROPEAN PATENT APPLICATION

(11) **EP 4 175 388 A1**
(43) Date of publication of application: **03.05.2023**
(21) Application number: 21832542.1
(22) Date of filing: 25.06.2021
(51) Int. Cl.: H04W 72/12

(54) **RADIO FREQUENCY RESOURCE ALLOCATION METHOD AND APPARATUS, AND ELECTRONIC DEVICE**

(30) Priority: 29.06.2020 CN 202010608637
(71) Applicant: Vivo Mobile Communication Co., Ltd., Dongguan, Guangdong 523863 (CN)
(72) Inventor: TSAI, Zong-Ying, Dongguan, Guangdong 523863 (CN); LI, Zhonghuang, Dongguan, Guangdong 523863 (CN); ZHANG, Yun-Xuan, Dongguan, Guangdong 523863 (CN); CHANG, Chi-Ju, Dongguan, Guangdong 523863 (CN); LIN, Yuan-Chieh, Dongguan, Guangdong 523863 (CN)
(74) Representative: Raffay & Fleck
(86) International application number: PCT/CN2021/102274
(87) International publication number: WO 2022/001851

(57) **Abstract**

Disclosed are a radio frequency resource allocation method and apparatus, and an electronic device, which belong to the technical field of communications. The method comprises: where a first data card triggers a first preset service, detecting whether a first radio frequency resource requested by the first data card overlaps with a second radio frequency resource occupied by a second data card; and where the second radio frequency resource overlaps with the first radio frequency resource, allocating a third radio frequency resource to the second data card.

## Description

### CROSS-REFERENCE TO RELATED APPLICATIONS

This application claims priority to Chinese Patent Application No. 202010608637.4, filed in China on June 29, 2020, which is incorporated herein by reference in its entirety.

### TECHNICAL FIELD

This application pertains to the field of communication technologies, and specifically relates to a radio frequency resource allocation method and apparatus, and an electronic device.

### BACKGROUND

With evolution of the dual-card dual-standby technology, it is possible to achieve the effect of simultaneous dual reception under the condition that frequency band components used by services on two subscriber identity module (Subscriber Identity Module, SIM) cards do not conflict with an antenna configuration.

In the prior art, if frequency band components required by camped-on cells corresponding to two standby SIM cards of an electronic device conflicts with an antenna configuration, which SIM card can use a radio frequency resource is usually determined according to priorities of the SIM cards. With such a configuration policy, a radio frequency resource of the SIM card with a lower priority is occupied by the SIM card with a higher priority when the SIM card with the lower priority performs a data network service, resulting in data packet loss or long delay and affecting normal use of the service.

It can be learned that, in the prior art, configuration effects of radio frequency resources are relatively poor for an electronic device including a plurality of SIM cards.

### SUMMARY

The purpose of embodiments of this application is to provide a radio frequency resource allocation method and apparatus, and an electronic device, so as to resolve a prior-art problem of relatively poor configuration effects of radio frequency resources for an electronic device including a plurality of SIM cards.

In order to resolve the foregoing technical problem, this application is implemented as follows:

According to a first aspect, an embodiment of this application provides a radio frequency resource allocation method. The method includes:
monitoring, in a case that a first data card triggers a first preset service, whether a first radio frequency resource requested by the first data card overlaps a second radio frequency resource occupied by a second data card; and
allocating a third radio frequency resource to the second data card in a case that the second radio frequency resource overlaps the first radio frequency resource, where the third radio frequency resource does not overlap the first radio frequency resource.

According to a second aspect, an embodiment of this application provides a radio frequency resource allocation apparatus. The apparatus includes:
a monitoring module, configured to monitor, in a case that a first data card triggers a first preset service, whether a first radio frequency resource requested by the first data card overlaps a second radio frequency resource occupied by a second data card; and
an allocation module, configured to allocate a third radio frequency resource to the second data card in a case that the second radio frequency resource overlaps the first radio frequency resource, where the third radio frequency resource does not overlap the first radio frequency resource.

According to a third aspect, an embodiment of this application provides an electronic device, where the electronic device includes a processor, a memory, and a program or instructions stored in the memory and capable of running on the processor, and when the program or instructions are executed by the processor, the steps of the method according to the first aspect are implemented.

According to a fourth aspect, an embodiment of this application provides a computer-readable storage medium, where the readable storage medium stores a program or instructions, and when the program or instructions are executed by a processor, the steps of the method according to the first aspect are implemented.

According to a fifth aspect, an embodiment of this application provides a chip, where the chip includes a processor and a communications interface, the communications interface is coupled to the processor, and the processor is configured to run a program or instructions to implement the method according to the first aspect.

According to a sixth aspect, an embodiment of this application provides a computer software product, where the computer software product is stored in a non-volatile storage medium, and the software product is configured to implement the steps of the method according to the first aspect when being executed by at least one processor.

According to a seventh aspect, an embodiment of this application provides an electronic device, where the electronic device is configured to execute the method according to the first aspect.

In the embodiments of this application, in a case that the first data card triggers the first preset service, whether the first radio frequency resource requested by the first data card overlaps the second radio frequency resource occupied by the second data card is monitored; and the third radio frequency resource is allocated to the second data card in a case that the second radio frequency resource overlaps the first radio frequency resource. In this application, based on whether the preset service is triggered, a data card allowed to occupy a radio frequency resource is determined on the electronic device, so as to adjust a radio frequency resource configuration of another data card. In this way, for the data card that triggers the preset service, normal running of the service is not affected by occupation of the radio frequency resource, thereby implementing dynamic allocation of radio frequency resources, and improving effects of radio frequency resource allocation for the electronic device.

### BRIEF DESCRIPTION OF DRAWINGS

FIG. 1 is a flowchart of a radio frequency resource allocation method according to an embodiment of this application;
FIG. 2 is a schematic diagram of a radio frequency path of an electronic device according to an embodiment of this application;
FIG. 3 is a flowchart of another radio frequency resource allocation method according to an embodiment of this application;
FIG. 4 is a flowchart of still another radio frequency resource allocation method according to an embodiment of this application;
FIG. 5 is a first structural diagram of a radio frequency resource allocation apparatus according to an embodiment of this application;
FIG. 6 is a second structural diagram of a radio frequency resource allocation apparatus according to an embodiment of this application;
FIG. 7 is a third structural diagram of a radio frequency resource allocation apparatus according to an embodiment of this application;
FIG. 8 is a first structural diagram of an electronic device according to an embodiment of this application; and
FIG. 9 is a second structural diagram of an electronic device according to an embodiment of this application.

### DETAILED DESCRIPTION OF EMBODIMENTS

The following clearly and completely describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application without creative efforts shall fall within the protection scope of this application.

In the specification and claims of this application, the terms such as "first" and "second" are intended to distinguish between similar objects but do not necessarily indicate a specific order or sequence. It should be understood that the data used in this way is interchangeable in appropriate circumstances so that the embodiments of this application can be implemented in other orders than the order illustrated or described herein, and "first" and "second" are usually for distinguishing same-type objects but not limiting the number of objects is not limited, for example, a first object may be one or multiple. In addition, "and/or" in this specification and claims indicates at least one of connected objects, and the symbol "/" generally indicates that the associated objects are in an "or" relationship.

The following describes in detail a radio frequency resource allocation method provided in the embodiments of this application by using specific embodiments and application scenarios thereof with reference to the accompanying drawings.

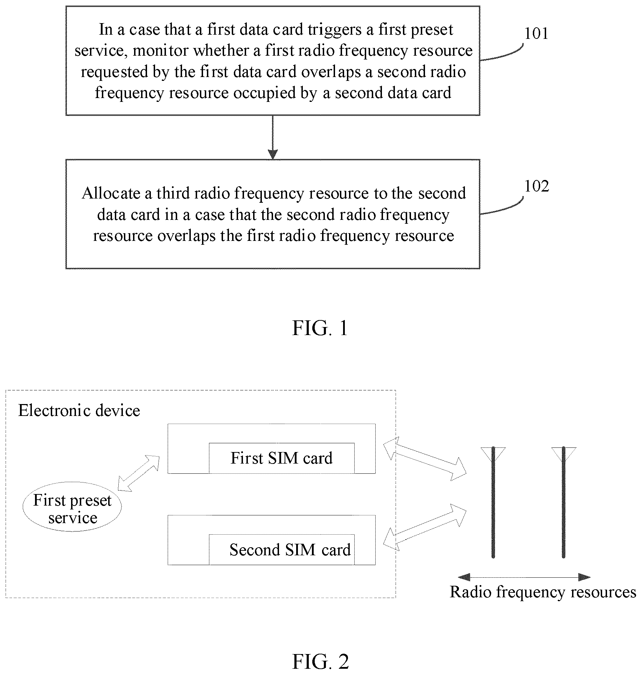

Referring to FIG. 1, FIG. 1 is a flowchart of a radio frequency resource allocation method according to an embodiment of this application.

It should be noted that the method may be applied to an electronic device, and the electronic device is user equipment (User Equipment, UE), including a mobile electronic device such as a mobile phone, a tablet personal computer (Tablet Personal Computer), a laptop computer (Laptop Computer), a personal digital assistant (personal digital assistant, PDA), a mobile Internet device (Mobile Internet Device, MID), or a wearable device (Wearable Device); a smart device such as a home voice assistant; a multimedia device; or a streaming media device. This embodiment of this application is described by using the radio frequency resource allocation method being applied to an electronic device as an example, which is not specifically limited.

As shown in FIG. 1, the method includes the following steps:

Step 101: In a case that a first data card triggers a first preset service, monitor whether a first radio frequency resource requested by the first data card overlaps a second radio frequency resource occupied by a second data card.

The first data card and the second data card may be understood as data network service cards provided by network operators for their network users, and may be SIM cards provided by a global system for mobile communications (Global System for Mobile Communications, GSM), or may be data network service cards provided by other communication systems, which is not specifically limited in this embodiment of this application.

For ease of understanding and description, the first SIM card and the second SIM card are used as examples herein to describe specific implementations of this embodiment of this application.

The first SIM card may be understood as a SIM card for providing a data network service on the electronic device, and the second SIM card may be understood as any standby SIM card on the electronic device other than the first SIM card. Generally, when there are at least two standby SIM cards on the electronic device, the user may select one of the SIM cards as a SIM card for providing the data network service.

The preset service is a specific service preset by a system of the electronic device or defined by a user, for example, voice service, paging service, or online game service in data services. Such specific services have higher requirements on delay. In the prior art, if a radio frequency resource of the first SIM card is occupied by the second SIM card when the first SIM card triggers the specific services, the specific services may experience data packet loss or delay during running, affecting normal running of the services. Therefore, when the specific services are triggered, a configuration of radio frequency resources needs to be optimized.

In this embodiment of this application, the first SIM card is a SIM card for providing a data network service on the electronic device. When the first SIM card triggers the first preset service, the first SIM card may be determined as an important service card, and the second SIM card may be determined as a non-important service card. It can be understood that when the second SIM card triggers the first preset service, the second SIM card may also be determined as an important service card, and the first SIM card as a non-important service card, which is not specifically limited in this embodiment of the application.

When the first SIM card triggers the first preset service, the first SIM card may send a radio frequency resource request, requesting the electronic device to allocate the first radio frequency resource corresponding to the first SIM card, so as to perform the first preset service. In this case, the electronic device may monitor whether the second radio frequency resource occupied by the second SIM card overlaps the first radio frequency resource occupied by the first SIM card, so as to determine whether the radio frequency resource occupied by the second SIM card affects running of the first preset service. The radio frequency resource may include a radio frequency band and a related antenna configuration.

Whether the second radio frequency resource occupied by the second SIM card overlaps the first radio frequency resource occupied by the first SIM card may be understood as whether a first radio frequency band corresponding to the first radio frequency resource requested by the first SIM card has an overlapping interval with a second radio frequency band corresponding to the second radio frequency resource. As shown in FIG. 2, assuming that the first SIM card and the second SIM card are inserted into the electronic device, the electronic device may maintain two radio frequency paths for dual communication. If the first radio frequency resource requested by the first SIM card overlaps the second radio frequency resource, the two SIM cards of the electronic device may use an overlapping radio frequency path, which may lead to preemption of the radio frequency resource.

Whether the second radio frequency resource occupied by the second SIM card overlaps the first radio frequency resource occupied by the first SIM card may alternatively be understood as whether the first radio frequency band corresponding to the first radio frequency resource requested by the first SIM card overlaps a radio frequency band corresponding to a serving cell on which the second SIM card currently camps.

Generally, radio frequency bands may be classified into a low frequency band, a medium frequency band, a medium-high frequency band, a high frequency band, and the like. For example, when a data network configuration corresponding to the first SIM card uses the fifth generation (5^{th} Generation, 5G) N41 frequency band and the fourth generation (4^{th} Generation, 4G) B39 frequency band for dual connection, both the 5G N41 frequency band and the 4G B39 frequency band are medium-high frequency bands. If the second radio frequency band used in a network configuration corresponding to the second SIM card is also a medium-high frequency band, it can be considered that the second radio frequency resource overlaps the first radio frequency resource.

Step 102: Allocate a third radio frequency resource to the second data card in a case that the second radio frequency resource overlaps the first radio frequency resource, where the third radio frequency resource does not overlap the first radio frequency resource.

For ease of understanding and description, the first SIM card and the second SIM card are still used as examples herein to describe specific implementations of this embodiment of this application.

In this embodiment of this application, in a case that the second radio frequency resource overlaps the first radio frequency resource, the electronic device dynamically configures a radio frequency resource usable for the second SIM card under the premise of being permitted in a current environment. Specifically, the electronic device may search for coverage of the third radio frequency resource within a preset range, and a criteria for determining the third radio frequency resource may be: a third radio frequency band corresponding to the third radio frequency resource does not overlap the first radio frequency band corresponding to the first radio frequency resource, and the third radio frequency resource is able to maintain requirements of basic services on the second SIM card.

In this way, compared with the prior art in which radio frequency resources are allocated based on fixed priorities of SIM cards, in this embodiment of this application, the electronic device can determine, based on whether the preset service is triggered, whether the radio frequency resource can be occupied, so that for the SIM card that triggers the preset service, running of the service may not be affected by occupation of radio frequency resource, thereby implementing dynamic allocation of radio frequency resources, and improving effects of radio frequency resource allocation for the electronic device.

In this embodiment of this application, in a case that the first data card triggers the first preset service, whether the first radio frequency resource requested by the first data card overlaps the second radio frequency resource occupied by the second data card is monitored; and the third radio frequency resource is allocated to the second data card in a case that the second radio frequency resource overlaps the first radio frequency resource. In this application, based on whether the preset service is triggered, a data card allowed to occupy a radio frequency resource is determined on the electronic device, so as to adjust a radio frequency resource configuration of another data card. In this way, for the data card that triggers the preset service, normal running of the service is not affected by occupation of the radio frequency resource, thereby implementing dynamic allocation of radio frequency resources, and improving effects of radio frequency resource allocation for the electronic device.

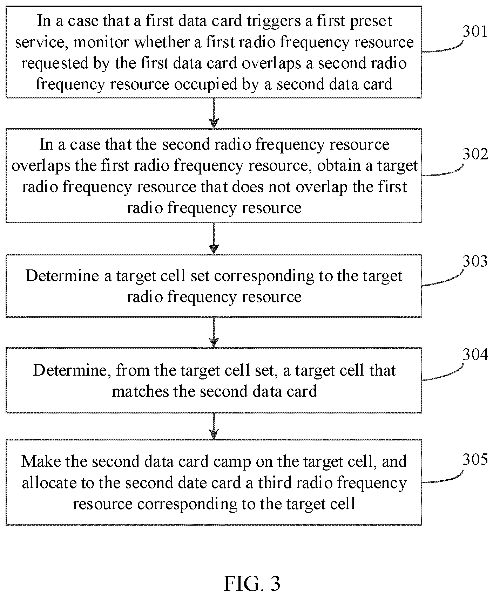

Referring to FIG. 3, FIG. 3 is a flowchart of another radio frequency resource allocation method according to an embodiment of this application.

It should be noted that the method may be applied to an electronic device, and the electronic device is user equipment (User Equipment, UE), including a mobile electronic device such as a mobile phone, a tablet personal computer (Tablet Personal Computer), a laptop computer (Laptop Computer), a personal digital assistant (personal digital assistant, PDA), a mobile Internet device (Mobile Internet Device, MID), or a wearable device (Wearable Device); a smart device such as a home voice assistant; a multimedia device; or a streaming media device. This embodiment of this application is described by using the radio frequency resource allocation method being applied to an electronic device as an example, which is not specifically limited.

As shown in FIG. 3, the method includes the following steps:

Step 301: In a case that a first data card triggers a first preset service, monitor whether a first radio frequency resource requested by the first data card overlaps a second radio frequency resource occupied by a second data card.

For a specific implementation form of this step, reference may be made to the description of step 101 in the embodiment shown in FIG. 1, which is not repeated herein to avoid repetition.

Step 302: In a case that the second radio frequency resource overlaps the first radio frequency resource, obtain a target radio frequency resource that does not overlap the first radio frequency resource.

In this embodiment of this application, the target radio frequency resource that does not overlap the first radio frequency resource may be a specific frequency band, or may be a frequency band list, where the frequency band list includes all radio frequency bands not overlapping a first radio frequency band corresponding to the first radio frequency resource, which is not specifically limited in this embodiment of this application.

In some implementations, the electronic device may obtain a system broadcast message through a broadcast control channel (Broadcast Control Channel, BCCH), and a system information block (System Information Block, SIB) of the system broadcast message includes neighboring cell information for inter-frequency cell reselection. Specifically, the electronic device may obtain an inter-frequency frequency band list from a SIB-5, and determines the inter-frequency frequency band list as the target radio frequency resource. In some other implementations, the electronic device may alternatively directly search, within a preset range, for the target radio frequency resource not overlapping the first radio frequency resource. This is not specifically limited in this embodiment of this application.

Step 303: Determine a target cell set corresponding to the target radio frequency resource.

For ease of understanding and description, the first SIM card and the second SIM card are still used as examples herein to describe specific implementations of this embodiment of this application.

In this embodiment of this application, under the premise of being permitted in a current environment, searching for the third radio frequency resource for the second SIM card may be considered as determining in the current environment whether there is a serving cell available for camping by the second SIM card and having a radio frequency resource not overlapping the first radio frequency resource.

Based on this, in this step, the electronic device may perform, based on the obtained target radio frequency resource, signal detection and cell detection on different radio frequency bands corresponding to the target radio frequency resource, so as to obtain serving cells covered by the target radio frequency resource to create the target cell set. In this way, the serving cell available for camping by the second SIM card can be directly selected from the target cell set subsequently.

Specifically, the electronic device may perform cell searching within a frequency band range corresponding to the obtained target radio frequency resource, perform time and frequency synchronization, and obtain cell information by using a synchronization scrambling code. For a specific implementation of cell searching, reference may be made to an implementation process of the prior art, and details are not repeated herein.

In some implementations, based on the neighboring cell information for inter-frequency cell reselection that is included in the SIB of the system broadcast message, the electronic device may alternatively directly obtain the inter-frequency cell list from the SIB-5 to create the target cell set, which is not specifically limited in this embodiment of this application.

Optionally, the determining a target cell set corresponding to the target radio frequency resource includes:
performing cell searching on the target radio frequency resource to obtain a first cell set;
performing a signal strength test separately on N cells in the first cell set; and
obtaining, from N cells, L cells whose signal strengths meet a preset camping condition, and grouping the L cells into a target cell set; where
N is an integer greater than or equal to 1, and L is an integer greater than or equal to 1 and less than or equal to N.

In this embodiment of this application, cell searching is performed within the frequency band range corresponding to the target radio frequency resource, and the obtained first cell set may be considered as a preliminary result of cell searching. Some cells in the first cell set may be set, according to a protocol, to be unavailable for camping, or are unavailable for camping due to not conforming to a cell camping specification, or are unavailable for camping due to a signal strength; therefore, the electronic device may determine, from the first target cell set, the target cell set available for camping by the second SIM card.

Specifically, the electronic device may perform a signal strength test separately on the N cells in the first cell set, and select the L cells whose signal strengths meet the preset camping condition to create the target cell set. A signal strength of each cell may be construed as a received signal code power (Received Signal Code Power, RSCP) of the cell measured by the electronic device, and may also be referred to as a received level value.

For example, using a cell A in the first cell set as an example, the electronic device may calculate a parameter Sxrlev based on a signal strength of the cell A measured by the electronic device and a minimum acceptance level of the cell A with reference to an S criteria for cell camping in the prior art. The preset camping condition may be a judgment condition stipulated in the protocol, that is, in a case of Sxrlev>0, the cell A may be selected into the target cell set; or the preset camping condition may be a judgment condition determined based on a threshold preset by the system of the electronic device or a user-defined threshold, so as to increase a standard for selecting a camp-on cell, which is not specifically limited in this embodiment of this application.

In this embodiment of this application, sorting is performed on the preliminary result of cell searching to ensure that each cell in the target cell set allows the electronic device to camp on and can provide a radio frequency resource usable for the second data card, further improving accuracy of radio frequency resource allocation for the electronic device.

It should be noted that, the implementations in this embodiment of this application are also applicable to the embodiment described in FIG. 1, with the same technical effects achieved. To avoid repetition, details are not repeated herein.

Step 304: Determine, from the target cell set, a target cell that matches the second data card.

For ease of understanding and description, the first SIM card and the second SIM card are still used as examples herein to describe specific implementations of this embodiment of this application.

In this embodiment of this application, when the target cell set includes only one cell, the target cell matching the second SIM card may be directly determined to be the cell; or when the target cell set includes a plurality of cells, the electronic device may determine a most appropriate cell in the plurality of cells for the second SIM card to camp on, so that a service on the second SIM card can use an optimal radio frequency resource.

Optionally, the determining, from the target cell set, a target cell that matches the second data card includes:
determining, from the target cell set, a cell with a highest signal strength and available for camping by the second data card as the target cell.

In this embodiment of this application, determining the cell with the highest signal strength and available for camping by the second data card as the target cell matching the second SIM card may be understood as: in general cases, all the cells in the target cell set allow the electronic device to camp on, and can provide radio frequency resources usable for the second SIM card. However, the second SIM card may fail to camp due to environmental factors. Therefore, the electronic device may perform a camping test for the second SIM card in each cell of the target cell set to determine a cell available for camping by the second SIM card. In addition, in order to enable the service on the second SIM card to use the optimal radio frequency resource, the electronic device may select a cell with a higher signal strength as the target cell.

In this embodiment of this application, the electronic device may first sort all the cells in the target cell set in descending order of signal strength, sequentially performs a camping test for the second SIM card, and uses the first cell available for successful camping by the second SIM card as the target cell. For example, if a sorting result of all the cells in the target cell set in descending order of signal strength is: cell A, cell B, cell C, ..., the electronic device first performs the camping test for the second SIM card in the foregoing order: the camping test for the second SIM card is first performed in the cell A, and if the second SIM card successfully camps on the cell A, the cell A is determined as the target cell; if the second SIM card does not successfully camp on the cell A, the camping test for the second SIM card is then performed in the cell B; ...; and so on. In this way, a cell available for successful camping by the second SIM card is determined as the target cell.

In other embodiments, the electronic device may alternatively perform a camping test for the second SIM card in all the cells in the target cell set, and determines, from cells available for camping by the second SIM card, a cell with a highest signal strength as the target cell, which is not specifically limited in this embodiment of this application.

It should be noted that, for an implementation of performing the camping test for the second SIM card, reference may be made to an implementation process in the prior art, and details are not described herein.

In this embodiment of this application, the electronic device determines the cell with the highest signal strength and available for camping by the second data card as the target cell, so that the second data card can successfully obtain and can also obtain the optimal radio frequency resource, thereby implementing dynamic allocation of radio frequency resources, and further improving effects of radio frequency resource allocation for the electronic device.

It should be noted that, the implementations in this embodiment of this application are also applicable to the embodiment described in FIG. 1, with the same technical effects achieved. To avoid repetition, details are not repeated herein.

Step 305: Make the second data card camp on the target cell, and allocate to the second data card a third radio frequency resource corresponding to the target cell.

For ease of understanding and description, the first SIM card and the second SIM card are still used as examples herein to describe specific implementations of this embodiment of this application.

In this step, after the target cell is determined, the electronic device can make the second SIM card camp on the target cell, and allocate to the second SIM card the third radio frequency resource corresponding to the target cell, thereby implementing adjustment of the radio frequency resource used by the second SIM card. In this way, the second SIM card does not occupy the radio frequency resource to be used by the first SIM card and the second SIM card is allocated a new radio frequency resource to maintain requirements of basic services.

Optionally, the monitoring, in a case that a first data card triggers a first preset service, whether a first radio frequency resource requested by the first data card overlaps a second radio frequency resource occupied by a second data card includes:
in a case that the first data card triggers the first preset service and the second data card triggers a second preset service, monitoring whether the first radio frequency resource requested by the first data card overlaps the second radio frequency resource requested by the second data card; and
the allocating a third radio frequency resource to the second data card in a case that the second radio frequency resource overlaps the first radio frequency resource includes:
   in a case that the second radio frequency resource overlaps the first radio frequency resource, comparing priorities of the first preset service and the second preset service; and
   in a case that the priority of the first preset service is higher than the priority of the second preset service, allocating the third radio frequency resource to the second data card.

In this embodiment of this application, the electronic device may set different priorities for different preset services based on different delay requirements of the preset services. For example, the preset services may be classified into major categories such as voice service, paging service, data service, and network selection service. Then, the electronic device may first set a priority order of the major categories of services, for example, a descending order of priorities is: voice service > paging service > data service > network selection service. The electronic device may alternatively set priorities for specific services in each service category. For example, a priority of a voice server for a contact 1 is higher than a priority of a voice service for a contact 2; or, for example, in the data service, a priority of an online game service is higher than a priority a of a web browsing service, which is not specifically limited in this embodiment of this application.

In a case that the first SIM card triggers the first preset service and the second SIM card triggers the second preset service, that is, in a case that two or more standby SIM cards of the electronic device all trigger the preset services, the electronic device may determine, according to priorities of the preset services, which SIM card can occupy the radio frequency resource. In a case that the priority of the first preset service is higher than the priority of the second preset service, the third radio frequency resource is allocated to the second SIM card. For a specific implementation of allocating the third radio frequency resource to the second SIM card, reference may be made to an implementation process in the foregoing embodiment, and to avoid repetition, details are not repeated herein.

In other embodiments, if the priority of the first preset service is lower than the priority of the second preset service, the electronic device may alternatively allocate the third radio frequency resource to the first SIM card. For a specific implementation of allocating the third radio frequency resource to the first SIM card, reference may be made to an implementation process of allocating the third radio frequency resource to the second SIM card in the foregoing embodiment, and to avoid repetition, details are not repeated herein.

If the priority of the first preset service is equal to the priority of the second preset service, the radio frequency resource used by the first preset service and the second preset service may be evenly allocated, and the even allocation may be construed as even allocation of a time of occupying the radio frequency resource between the first SIM card and the second SIM card, which is not limited herein.

In this embodiment of this application, in a case that two or more standby data cards of the electronic device all trigger the preset services, which data card can occupy the radio frequency resource is determined according to the priorities of the preset services, and a radio frequency resource used by the other data card is adjusted, thereby further optimizing dynamic allocation of radio frequency resources, and further improving effects of radio frequency resource allocation for the electronic device.

It should be noted that, the implementations in this embodiment of this application are also applicable to the embodiment described in FIG. 1, with the same technical effects achieved. To avoid repetition, details are not described here.

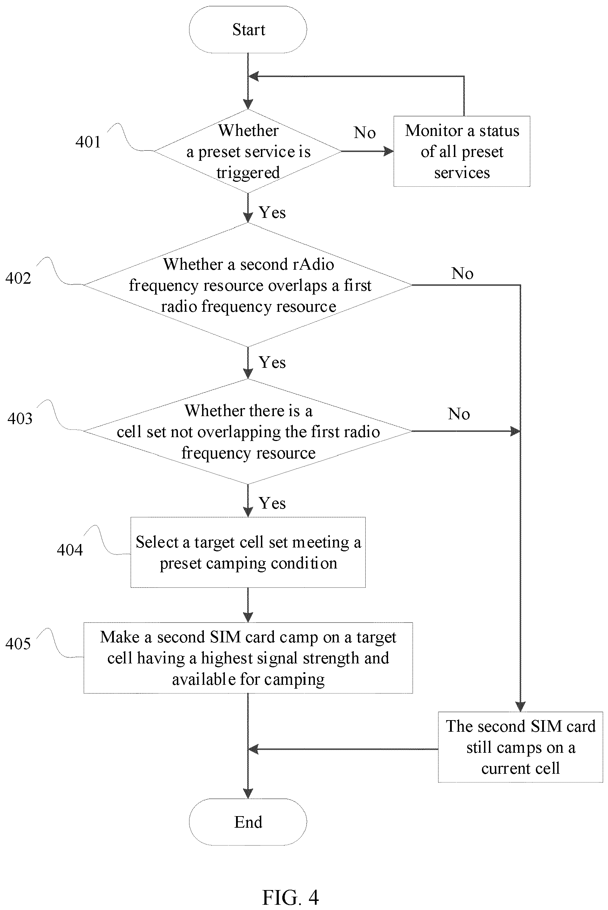

The following describes this embodiment of this application by using an example implementation. Two cards, namely a first SIM card and a second SIM card, are inserted into the electronic device, and the user sets the first SIM card to be a SIM card that provides a data network service. As shown in FIG. 4,

Step 401: In a standby process, the electronic device detects whether a preset service is triggered; and in a case that the first SIM card triggers a first preset service, proceed to step 402; or in a case that the preset service is not triggered, continuously monitor a status of all preset services.

Step 402: When the first SIM card of the electronic device triggers the first preset service, monitor whether a radio frequency resource requested by the first SIM card overlaps a second radio frequency resource occupied by the second SIM card.

Assuming that a data network configuration of the first SIM card uses the 5G N41 frequency band and the 4G B39 frequency band for dual connection, if a radio frequency band corresponding to a serving cell on which the second SIM card camps is also a medium-high frequency band, it can be considered that the second radio frequency resource overlaps the first radio frequency resource, step 403 is then performed. In a case that the second radio frequency resource does not overlap the first radio frequency resource, the electronic device may not adjust the radio frequency resource of the second SIM card, the second SIM card may still camp on a current serving cell, and the procedure ends.

Step 403: Monitor whether there is a cell set not overlapping the first radio frequency resource.

After obtaining an inter-frequency frequency band list from the system broadcast message SIB-5, the electronic device performs cell searching to determine whether cells are present within coverage of the radio frequency resource that does not overlap the first radio frequency resource; and in a case that there is a cell set not overlapping the first radio frequency resource in the current environment, proceeds to step 404. In a case that there is no cell set not overlapping the first radio frequency resource in the current environment, the electronic device may not adjust the radio frequency resource of the second SIM card, the second SIM card may still camp on the current serving cell, and the procedure ends.

Step 404: Select a target cell set meeting a preset camping condition from the cell set that is obtained through searching and that does not overlap the first radio frequency resource.

From the cell set that is obtained through searching and that does not overlap the first radio frequency resource, the electronic device determines a target cell set conforming to a protocol camping specification and allowed to camp on.

Step 405: Make the second SIM card camp on a target cell having a highest signal strength and available for camping in the target cell set, and end the procedure.

In this embodiment of this application, on a basis of the embodiment shown in FIG. 1, a plurality of optional implementations are added, which further optimizes dynamic configuration of radio frequency resources and further improves effects of radio frequency resource allocation for the electronic device.

To sum up, this embodiment of this application provides a radio frequency resource allocation method. In the case that the first data card triggers the first preset service, whether the first radio frequency resource requested by the first data card overlaps the second radio frequency resource occupied by the second data card is monitored. In the case that the second radio frequency resource overlaps the first radio frequency resource, the third radio frequency resource is allocated to the second data card. In this application, based on whether the preset service is triggered, a data card allowed to occupy a radio frequency resource is determined on the electronic device, so as to adjust a radio frequency resource configuration of another data card. In this way, for the data card that triggers the preset service, normal running of the service is not affected by occupation of the radio frequency resource, thereby implementing dynamic allocation of radio frequency resources, and improving effects of radio frequency resource allocation for the electronic device.

It should be noted that, in the radio frequency resource allocation method provided in this embodiment of this application, the execution subject may be a radio frequency resource allocation apparatus, or a control module for executing the radio frequency resource allocation method in the radio frequency resource allocation apparatus. In this embodiment of this application, the radio frequency resource allocation apparatus provided in this embodiment of this application is described by using the radio frequency resource allocation method being executed by the radio frequency resource allocation apparatus as an example.

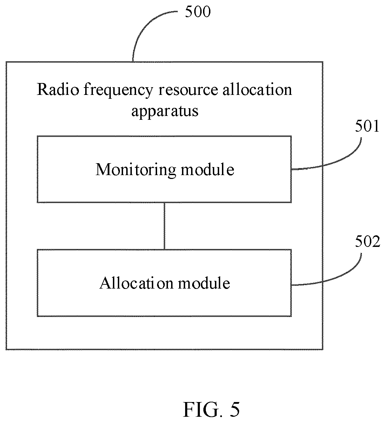

Referring to FIG. 5, FIG. 5 is a schematic structural diagram of a radio frequency resource allocation apparatus according to an embodiment of this application.

As shown in FIG. 5, the radio frequency resource allocation apparatus 500 includes:
a monitoring module 501, configured to monitor, in a case that a first data card triggers a first preset service, whether a first radio frequency resource requested by the first data card overlaps a second radio frequency resource occupied by a second data card; and
an allocation module 502, configured to allocate a third radio frequency resource to the second data card in a case that the second radio frequency resource overlaps the first radio frequency resource.

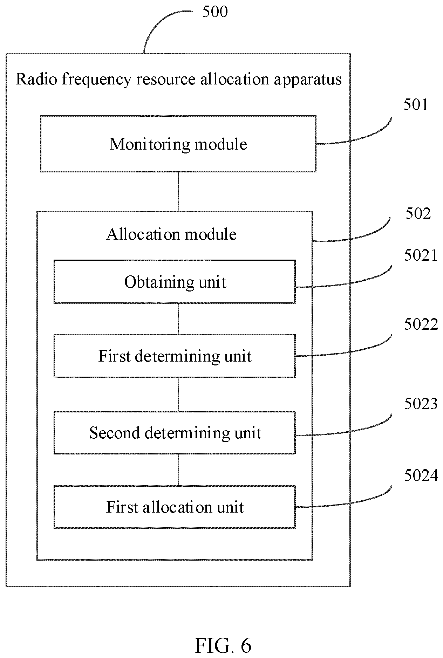

Optionally, as shown in FIG. 6, the allocation module 502 includes:
an obtaining unit 5021, configured to obtain a target radio frequency resource that does not overlap the first radio frequency resource;
a first determining unit 5022, configured to determine a target cell set corresponding to the target radio frequency resource;
a second determining unit 5023, configured to determine, from the target cell set, a target cell that matches the second data card; and
a first allocation unit 5024, configured to make the second data card camp on the target cell, and allocate to the second data card a third radio frequency resource corresponding to the target cell.

Optionally, the first determining unit 5022 includes:
an obtaining subunit, configured to perform cell searching on the target radio frequency resource to obtain a first cell set;
a testing subunit, configured to perform a signal strength test separately on N cells in the first cell set; and
a first determining subunit, configured to obtain, from N cells, L cells whose signal strengths meet a preset camping condition, and group the L cells into a target cell set; where
N is an integer greater than or equal to 1, and L is an integer greater than or equal to 1 and less than or equal to N.

Optionally, the second determining unit 5023 includes:
a second determining subunit, configured to determine, from the target cell set, a cell with a highest signal strength and available for camping by the second data card as the target cell.

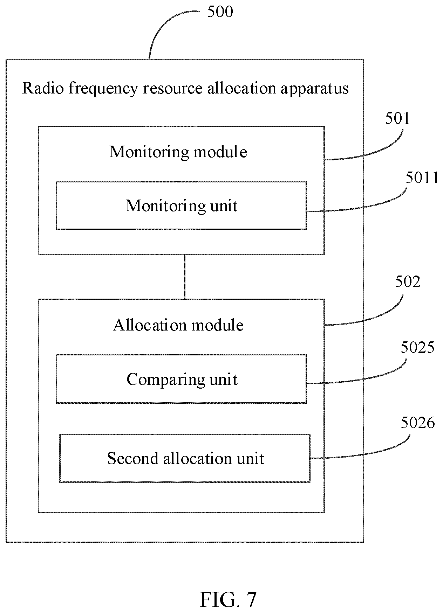

Optionally, as shown in FIG. 7, the monitoring module 501 includes:
a monitoring unit 5011, configured to: in a case that the first data card triggers the first preset service and the second data card triggers a second preset service, monitor whether the first radio frequency resource requested by the first data card overlaps the second radio frequency resource requested by the second data card.

The allocation module 502 includes:
a comparing unit 5025, configured to: in a case that the second radio frequency resource overlaps the first radio frequency resource, compare priorities of the first preset service and the second preset service; and
a second allocation unit 5026, configured to: in a case that the priority of the first preset service is higher than the priority of the second preset service, allocate the third radio frequency resource to the second data card.

The radio frequency resource allocation apparatus in this embodiment of this application can monitor, in the case that the first data card triggers the first preset service, whether the first radio frequency resource requested by the first data card overlaps the second radio frequency resource occupied by the second data card, and in the case that the second radio frequency resource overlaps the first radio frequency resource, allocates the third radio frequency resource to the second data card. Based on whether the preset service is triggered, a data card allowed to occupy a radio frequency resource is determined on the electronic device, so as to adjust a radio frequency resource configuration of another data card. In this way, for the data card that triggers the preset service, normal running of the service is not affected by occupation of the radio frequency resource, thereby implementing dynamic allocation of radio frequency resources, and improving effects of radio frequency resource allocation for the electronic device.

The radio frequency resource allocation apparatus in this embodiment of this application may be an apparatus, or may be a component, an integrated circuit, or a chip in a terminal. The apparatus may be a mobile electronic device or a non-mobile electronic device. For example, the mobile electronic device may be a mobile phone, a tablet computer, a notebook computer, a palmtop computer, an in-vehicle electronic device, a wearable device, an ultra-mobile personal computer (ultra-mobile personal computer, UMPC), a netbook, a personal digital assistant (personal digital assistant, PDA), or the like. The non-mobile electronic device may be a server, a network-attached storage (Network Attached Storage, NAS), a personal computer (personal computer, PC), a television (television, TV), a teller machine, a self-service machine, or the like. This is not specifically limited in the embodiments of this application.

The radio frequency resource allocation apparatus in this embodiment of this application may be an apparatus with an operating system. The operating system may be an Android (Android) operating system, an iOS operating system, or other possible operating systems, and is not specifically limited in the embodiments of this application.

The radio frequency resource allocation apparatus provided in this embodiment of this application is capable of implementing the processes that are implemented by the method embodiments in FIG. 1, FIG. 3, and FIG. 4. To avoid repetition, details are not described herein again.

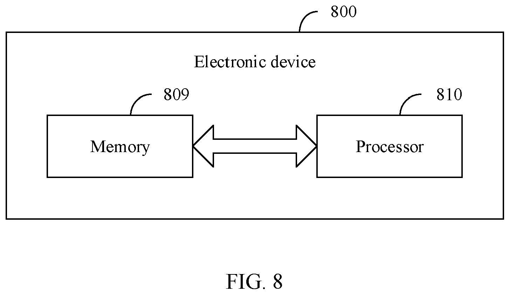

Optionally, as shown in FIG. 8, an embodiment of this application further provides an electronic device, including a processor 810, a memory 809, and a program or instructions stored in the memory 809 and capable of running on the processor 810. When the program or instructions are executed by the processor 810, the processes of the foregoing embodiment of the radio frequency resource allocation method are implemented, with the same technical effects achieved. To avoid repetition, details are not described herein again.

It should be noted that the electronic device in this embodiment of this application includes the aforementioned mobile electronic device and non-mobile electronic device.

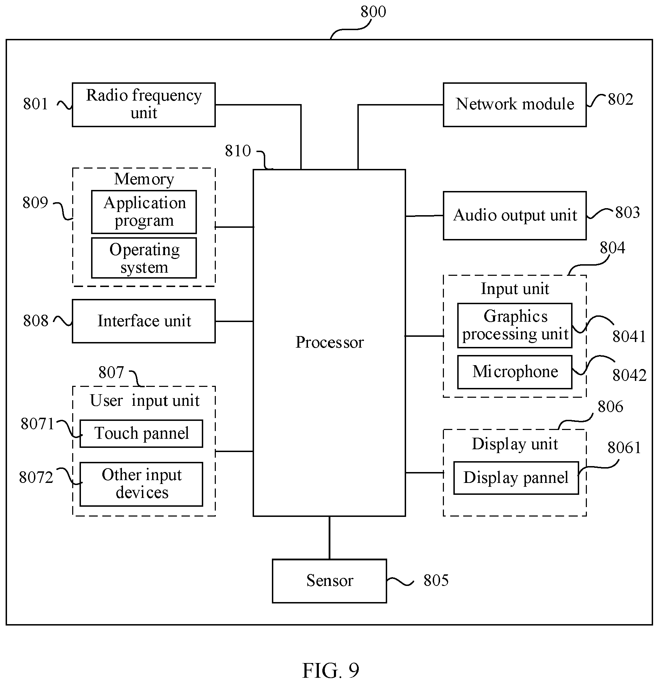

FIG. 9 is a schematic diagram of a hardware structure of an electronic device for implementing the embodiments of this application.

The electronic device 800 includes but is not limited to components such as a radio frequency unit 801, a network module 802, an audio output unit 803, an input unit 804, a sensor 805, a display unit 806, a user input unit 807, an interface unit 808, a memory 809, and a processor 810.

A person skilled in the art can understand that the electronic device 800 may further include a power supply (for example, a battery) supplying power to all components, and the power supply may be logically connected to the processor 810 through a power management system. In this way, functions such as charge management, discharge management, and power consumption management are implemented by using the power management system. The structure of the electronic device shown in FIG. 9 does not constitute any limitation on the electronic device. The electronic device may include more or fewer components than shown in the figure, or a combination of some components, or the components disposed differently. Details are not repeated herein.

The processor 810 is configured to monitor, in a case that a first data card triggers a first preset service, whether a first radio frequency resource requested by the first data card overlaps a second radio frequency resource occupied by a second data card; and
allocate a third radio frequency resource to the second data card in a case that the second radio frequency resource overlaps the first radio frequency resource, where the third radio frequency resource does not overlap the first radio frequency resource.

Optionally, the processor 810 is further configured to obtain a target radio frequency resource that does not overlap the first radio frequency resource;
determine a target cell set corresponding to the target radio frequency resource;
determine, from the target cell set, a target cell that matches the second data card; and
make the second data card camp on the target cell, and allocate to the second data card a third radio frequency resource corresponding to the target cell.

Optionally, the processor 810 is further configured to perform cell searching on the target radio frequency resource to obtain a first cell set;
perform a signal strength test separately on N cells in the first cell set; and
obtain, from N cells, L cells whose signal strengths meet a preset camping condition, and grouping the L cells into a target cell set; where
N is an integer greater than or equal to 1, and L is an integer greater than or equal to 1 and less than or equal to N.

Optionally, the processor 810 is further configured to determine, from the target cell set, a cell with a highest signal strength and available for camping by the second data card as the target cell.

Optionally, the processor 810 is further configured to: in a case that the first data card triggers the first preset service and the second data card triggers a second preset service, monitor whether the first radio frequency resource requested by the first data card overlaps the second radio frequency resource requested by the second data card; and
in a case that the second radio frequency resource overlaps the first radio frequency resource, compare priorities of the first preset service and the second preset service; and
in a case that the priority of the first preset service is higher than the priority of the second preset service, allocate the third radio frequency resource to the second data card.

The electronic device in this embodiment of this application monitors, in a case that the first data card triggers the first preset service, whether the first radio frequency resource requested by the first data card overlaps the second radio frequency resource occupied by the second data card; and allocates the third radio frequency resource to the second data card in a case that the second radio frequency resource overlaps the first radio frequency resource. In this application, based on whether the preset service is triggered, a data card allowed to occupy a radio frequency resource is determined on the electronic device, so as to adjust a radio frequency resource configuration of another data card. In this way, for the data card that triggers the preset service, normal running of the service is not affected by occupation of the radio frequency resource, thereby implementing dynamic allocation of radio frequency resources, and improving effects of radio frequency resource allocation for the electronic device.

It can be understood that in this embodiment of this application, the input unit 804 may include a graphics processing unit (Graphics Processing Unit, GPU) 8041 and a microphone 8042. The graphics processing unit 8041 processes image data of a still picture or video obtained by an image capture apparatus (such as a camera) in a video capture mode or an image capture mode. The display unit 806 may include a display panel 8061, and the display panel 8061 may be configured in a form of a liquid crystal display, an organic light-emitting diode, and the like. The user input unit 807 may include a touch panel 8071 and other input devices 8072. The touch panel 8071 is also referred to as a touchscreen. The touch panel 8071 may include two parts: a touch detection apparatus and a touch controller. The other input devices 8072 may include but are not limited to a physical keyboard, a function key (such as a volume control key or a power on/off key), a trackball, a mouse, a joystick, and the like. Details are not described herein. The memory 809 may be configured to store software programs and various data, including but not limited to application programs and an operating system. The processor 810 may integrate an application processor and a modem processor, where the application processor mainly processes the operating system, user interfaces, application programs, and the like, and the modem processor mainly processes wireless communication. It can be understood that the modem processor may alternatively be not integrated in the processor 810.

An embodiment of this application further provides a readable storage medium, where the readable storage medium stores a program or instructions. When the program or instructions are executed by a processor, the processes of the foregoing embodiment of the radio frequency resource allocation method can be implemented, with the same technical effects achieved. To avoid repetition, details are not described herein again.

The processor is a processor in the electronic device described in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, where the chip includes a processor and a communications interface. The communications interface is coupled to the processor, and the processor is configured to run a program or instructions of a network device to implement the processes of the foregoing embodiments of the radio frequency resource allocation method, with the same technical effects achieved. To avoid repetition, details are not described herein again.

It should be understood that the chip mentioned in the embodiments of this application may also be referred to as a system-level chip, a system chip, a chip system, a system-on-chip, or the like.

It should be noted that the terms "include", "comprise", or any of their variants are intended to cover a non-exclusive inclusion, such that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

A person of ordinary skill in the art may be aware that the units and algorithm steps in the examples described with reference to the embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this disclosure.

It may be clearly understood by a person skilled in the art that, for the purpose of convenient and brief description, for a detailed working process of the foregoing system, apparatus, and unit, reference may be made to a corresponding process in the foregoing method embodiments, and details are not described again herein.

In the embodiments provided in this application, it should be understood that the disclosed apparatus and method may be implemented in other manners. For example, the described apparatus embodiment is merely an example. For example, the unit division is merely logical function division and may be other division in actual implementation. For example, a plurality of units or components may be combined or integrated into another system, or some features may be ignored or may not be performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network elements. Some or all of the units may be selected based on actual requirements to achieve the objectives of the solutions of the embodiments.

In addition, functional units in the embodiments of this disclosure may be integrated into one processing unit, or each of the units may exist alone physically, or two or more units are integrated into one unit.

According to the foregoing description of the implementations, a person skilled in the art may clearly understand that the methods in the foregoing embodiments may be implemented by using software in combination with a necessary common hardware platform, and certainly may alternatively be implemented by using hardware. However, in most cases, the former is a preferred implementation. Based on such an understanding, the technical solutions of this application essentially or the part contributing to the prior art may be implemented in a form of a software product. The software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

A person of ordinary skill in the art may understand that all or some of the processes of the methods in the embodiments may be implemented by a computer program controlling relevant hardware. The program may be stored in a computer readable storage medium. When the program runs, the processes of the method embodiments may be included. The foregoing storage medium may be a magnetic disk, an optical disc, a read-only memory (Read-Only Memory, ROM), a random access memory (Random Access Memory, RAM), or the like.

It can be understood that the embodiments described in this disclosure may be implemented by hardware, software, firmware, middleware, microcode, or a combination thereof. For hardware implementation, a module, a unit, or a subunit may be implemented in one or more application specific integrated circuits (Application Specific Integrated Circuit, ASIC), digital signal processors (Digital Signal Processor, DSP), digital signal processing devices (DSP Device, DSPD), programmable logic devices (Programmable Logic Device, PLD), field-programmable gate arrays (Field-Programmable Gate Array, FPGA), general-purpose processors, controllers, microcontrollers, microprocessors, and other electronic units for performing the functions described in this disclosure, or a combination thereof.

For software implementation, the techniques described in the embodiments of this disclosure may be implemented by modules (such as processes and functions) that perform the functions described in the embodiments of this disclosure. Software code may be stored in the memory and executed by the processor. The memory may be implemented in or outside the processor.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A radio frequency resource allocation method, comprising:
monitoring, in a case that a first data card triggers a first preset service, whether a first radio frequency resource requested by the first data card overlaps a second radio frequency resource occupied by a second data card; and
allocating a third radio frequency resource to the second data card in a case that the second radio frequency resource overlaps the first radio frequency resource, wherein the third radio frequency resource does not overlap the first radio frequency resource.

2. The method according to claim 1, wherein the allocating a third radio frequency resource to the second data card comprises:
obtaining a target radio frequency resource that does not overlap the first radio frequency resource;
determining a target cell set corresponding to the target radio frequency resource;
determining, from the target cell set, a target cell that matches the second data card; and
making the second data card camp on the target cell, and allocating to the second data card a third radio frequency resource corresponding to the target cell.

3. The method according to claim 2, wherein the determining a target cell set corresponding to the target radio frequency resource comprises:
performing cell searching on the target radio frequency resource to obtain a first cell set;
performing a signal strength test separately on N cells in the first cell set; and
obtaining, from N cells, L cells whose signal strengths meet a preset camping condition, and grouping the L cells into a target cell set; wherein
N is an integer greater than or equal to 1, and L is an integer greater than or equal to 1 and less than or equal to N.

4. The method according to claim 2, wherein the determining, from the target cell set, a target cell that matches the second data card comprises:
determining, from the target cell set, a cell with a highest signal strength and available for camping by the second data card as the target cell.

5. The method according to claim 1, wherein the monitoring, in a case that a first data card triggers a first preset service, whether a first radio frequency resource requested by the first data card overlaps a second radio frequency resource occupied by a second data card comprises:
in a case that the first data card triggers the first preset service and the second data card triggers a second preset service, monitoring whether the first radio frequency resource requested by the first data card overlaps the second radio frequency resource requested by the second data card; and
the allocating a third radio frequency resource to the second data card in a case that the second radio frequency resource overlaps the first radio frequency resource comprises:
in a case that the second radio frequency resource overlaps the first radio frequency resource, comparing priorities of the first preset service and the second preset service; and
in a case that the priority of the first preset service is higher than the priority of the second preset service, allocating the third radio frequency resource to the second data card.

6. A radio frequency resource allocation apparatus, comprising:
a monitoring module, configured to monitor, in a case that a first data card triggers a first preset service, whether a first radio frequency resource requested by the first data card overlaps a second radio frequency resource occupied by a second data card; and
an allocation module, configured to allocate a third radio frequency resource to the second data card in a case that the second radio frequency resource overlaps the first radio frequency resource, wherein the third radio frequency resource does not overlap the first radio frequency resource.

7. The apparatus according to claim 6, wherein the allocation module comprises:
an obtaining unit, configured to obtain a target radio frequency resource that does not overlap the first radio frequency resource;
a first determining unit, configured to determine a target cell set corresponding to the target radio frequency resource;
a second determining unit, configured to determine, from the target cell set, a target cell that matches the second data card; and
a first allocation unit, configured to make the second data card camp on the target cell, and allocate to the second data card a third radio frequency resource corresponding to the target cell.

8. The apparatus according to claim 7, wherein the first determining unit comprises:
an obtaining subunit, configured to perform cell searching on the target radio frequency resource to obtain a first cell set;
a testing subunit, configured to perform a signal strength test separately on N cells in the first cell set; and
a first determining subunit, configured to obtain, from N cells, L cells whose signal strengths meet a preset camping condition, and group the L cells into a target cell set; wherein
N is an integer greater than or equal to 1, and L is an integer greater than or equal to 1 and less than or equal to N.

9. The apparatus according to claim 7, wherein the second determining unit comprises:
a second determining subunit, configured to determine, from the target cell set, a cell with a highest signal strength and available for camping by the second data card as the target cell.

10. The apparatus according to claim 6, wherein the monitoring module comprises:
a monitoring unit, configured to: in a case that the first data card triggers the first preset service and the second data card triggers a second preset service, monitor whether the first radio frequency resource requested by the first data card overlaps the second radio frequency resource requested by the second data card; and
the allocation module further comprises:
a comparing unit, configured to: in a case that the second radio frequency resource overlaps the first radio frequency resource, compare priorities of the first preset service and the second preset service; and
a second allocation unit, configured to: in a case that the priority of the first preset service is higher than the priority of the second preset service, allocate the third radio frequency resource to the second data card.

11. An electronic device, comprising a processor, a memory, and a program or instructions stored in the memory and capable of running on the processor, wherein when the program or instructions are executed by the processor, the steps of the radio frequency resource allocation method according to any one of claims 1 to 5 are implemented.

12. A readable storage medium, wherein the readable storage medium stores a program or instructions, and when the program or instructions are executed by a processor, the steps of the radio frequency resource allocation method according to any one of claims 1 to 5 are implemented.

13. A chip, wherein the chip comprises a processor and a communications interface, the communications interface is coupled to the processor, and the processor is configured to execute a program or instructions to implement the steps of the radio frequency resource allocation method according to any one of claims 1 to 5.

14. A computer software product, wherein the computer software product is stored in a non-volatile storage medium, and the software product is configured to implement the steps of the radio frequency resource allocation method according to any one of claims 1 to 5 when being executed by at least one processor.

15. An electronic device, wherein the electronic device is configured to perform the radio frequency resource allocation method according to any one of claims 1 to 5.
